# EUROPEAN PATENT APPLICATION

(11) **EP 4 703 483 A1**
(43) Date of publication of application: **04.03.2026**
(21) Application number: 24797190.6
(22) Date of filing: 26.04.2024
(51) Int. Cl.: C22B 21/00, C22B 1/248, C22B 7/00, H05B 6/64

(54) **PRODUCTION METHOD FOR RECYCLED ALUMINUM METAL LUMP**

(30) Priority: 28.04.2023 JP 2023074519
(71) Applicant: K.K. Sun Metalon, Yokohama City, Kanagawa 240-0005 (JP)
(72) Inventor: TOMITA, Takashi, Toyota-shi, Aichi 471-8571 (JP); FURUKAWA, Yuichi, Toyota-shi, Aichi 471-8571 (JP); NISHIOKA, Kazuhiko, Yokohama City, Kanagawa 240-0005 (JP); YASU, Takashi, Yokohama City, Kanagawa 240-0005 (JP); MAEDA, Yuki, Yokohama City, Kanagawa 240-0005 (JP)
(74) Representative: Hoffmann Eitle
(86) International application number: PCT/JP2024/016481
(87) International publication number: WO 2024/225447

(57) **Abstract**

Provided is a method for manufacturing a recycled aluminum metal lump efficiently from aluminum scrap. The invention relates to a method for manufacturing a recycled aluminum metal lump including irradiating aluminum metal including aluminum scrap with a microwave.

## Description

### Technical Field

The present invention relates to a method for manufacturing a recycled aluminum metal lump.

### Background Art

By reducing the weight of automobile components, fuel efficiency can be improved, and power consumption can be reduced. Therefore, studies are being conducted to replace iron-based materials conventionally used with aluminum-based materials.

Aluminum metals (ingots), which are raw materials for such aluminum-based materials, can be manufactured by refining bauxite, which is crude ore. However, refining requires an enormous volume of energy. Accordingly, in recent years, attempts have been made to manufacture aluminum ingots or products by reusing aluminum scrap generated from ingots and products.

For example, Patent Literature 1 discloses a purification method of aluminum scrap. In the purification method, aluminum scrap is melted in a melting furnace, purification is performed on a molten material to remove impurities contained in the molten material, and the purified material is then discharged and cast into an ingot with a predetermined size to regenerate an aluminum ingot again. At that time, the melting step and the purification step of the aluminum scrap are separated, and the purification step is coupled with the casting step. In the melting furnace, only melting of the aluminum scrap is performed, and the molten material is discharged into a ladle. The ladle is covered with a refractory lid communicated with an exhaust means, and the atmosphere inside the ladle is depressurized to a predetermined pressure and held for a predetermined period to remove easily volatile components from the molten metal. Afterward, the pressure is restored to atmospheric pressure again, and the molten metal is continuously injected into a casting mold.

### Citation List

### Patent Literature

Patent Literature 1: JP 2009-108346 A

### Summary of Invention

### Technical Problem

The form of aluminum scrap can be broadly divided into process scrap and obsolete scrap. Examples of the process scrap include mainly new aluminum scrap generated from press plants and chips generated from machine plants.

In order to be reused, it is necessary to make aluminum scrap in such a form into briquettes by pretreatment, such as drying and/or compression forming; afterward, melt the briquettes in aluminum molten metal, and cast the aluminum molten metal into aluminum ingots or products.

However, for example, in the case of chips, the proportion of melting in aluminum molten metal, that is, the melting yield, is about 20%, and even in briquettes, the melting yield to aluminum molten metal remains about 40%. Therefore, efforts are being made to improve the melting efficiency by stirring molten metal or inserting chips and/or briquettes into the gaps between ingots.

In addition, the melting of aluminum scrap into aluminum molten metal is accompanied by the generation of carbon dioxide (CO₂) by increasing the molten metal temperature and/or performing flux treatment, during refining. Since CO₂ can be a cause of global warming, it is required to be reduced.

Therefore, the present invention has an objective to provide a method for manufacturing a recycled aluminum metal lump efficiently from aluminum scrap.

### Solution to Problem

The inventors examined various means to solve the above problems. As a result, they discovered that a recycled aluminum metal lump is manufactured by irradiating aluminum scrap with a microwave and completed the present invention.

That is, the outline of the present invention is as follows.
(1) A method for manufacturing a recycled aluminum metal lump, the method comprising a step of irradiating aluminum metal comprising aluminum scrap with a microwave.
(2) The method according to (1) in which the aluminum scrap is aluminum scrap in one or more forms selected from the group consisting of powder, chip, burr, and briquette.
(3) The method according to (1) or (2), further comprising a step of compressing the aluminum metal.
(4) The method according to (3) in which the step of compressing the aluminum metal is performed before irradiating with the microwave, during irradiating with the microwave, and/or after irradiating with the microwave.
(5) The method according to (3) or (4) in which the step of compressing the aluminum metal is performed using a molding box.

This description encompasses content disclosed in Japanese Patent Application No. 2023-074519 forming the basis for priority of this application.

### Advantageous Effects of Invention

With the present invention, a method for manufacturing a recycled aluminum metal lump efficiently from aluminum scrap is provided.

### Brief Description of Drawings

Fig. 1 shows photographs of the external appearance and interior of Comparative Example 1 and Example 1.
Fig. 2 shows photographs of the sectional structures of Comparative Example 2 and Example 1.
Fig. 3 shows photographs showing the states after the melting of chips, Comparative Example 2, and Example 1.
Fig. 4 is a table showing the results of melting experiments of chips, Comparative Example 2, and Example 1 into aluminum molten metal.

### Description of Embodiments

The following describes preferred embodiments of the present invention in detail.

In the description, features of the present invention are described with reference to the drawings, as necessary. Note that a method for manufacturing a recycled aluminum metal lump of the present invention is not limited to the embodiments below, and can be implemented in various configurations where changes, improvements, and the like which a person skilled in the art can make are given without departing from the gist of the present invention. In addition, in the present invention, the expression "a numerical value (lower limit) to a numerical value (upper limit)" refers to a range that includes the lower limit and the upper limit.

The present invention relates to a method for manufacturing a recycled aluminum metal lump, comprising a step of irradiating aluminum metal comprising aluminum scrap with a microwave (a microwave irradiation step to aluminum metal).

In the present invention, aluminum metal is a metal and/or alloy comprising aluminum (Al) as a main composition. In addition, a recycled aluminum metal lump is a metal lump and/or alloy lump comprising aluminum (Al) as a main composition.

The aluminum metal comprises aluminum scrap as an aluminum source (aluminum material).

Examples of the aluminum scrap include, for example, materials recycled back from leftover materials in the casting plan (gate system, runner, and so on) and/or chips generated in the manufacturing process of automotive aluminum components, relatively high-grade aluminum scrap foil and/or printing plates, 5000 series scrap (Al-Mg alloy), 6000 series scrap (Al-Mg-Si alloy), and 7000 series scrap (Al-Zn-Mg alloy) (these include, for example, panel materials for automobiles and/or home appliances, wrought aluminum materials for radiators and the like, aircraft part materials, and the like). As the aluminum scrap, not only one kind but two or more kinds may be used depending on the chemical composition of the aluminum scrap. As the aluminum scrap, aluminum scrap whose composition have not been confirmed may be used.

The aluminum scrap is, for example, aluminum scrap in one or more forms selected from the group consisting of powder, chips, burrs, briquettes, and the like. Here, briquettes are produced by compression forming aluminum scrap in fine pieces, such as chips and burrs. When the aluminum scrap is a mixture of two or more forms, the mixture may be homogeneous or inhomogeneous. In one embodiment, the mixture is homogeneous.

The proportion of the aluminum scrap comprised in the aluminum metal is not limited. The aluminum comprised in the aluminum metal, other than the aluminum scrap as an aluminum source, may be a pure aluminum ingot or metal lump, and/or an aluminum alloy. The proportion of the aluminum scrap comprised in the aluminum metal may be 100 mass% based on the total mass of the aluminum metal.

In addition to Al as a main composition, the above aluminum metal may further comprise other modified alloy elements, for example, one or more elements (other elements) selected from the group consisting of boron (B), carbon (C), nitrogen (N), silicon (Si), magnesium (Mg), manganese (Mn), iron (Fe), copper (Cu), titanium (Ti), nickel (Ni), zirconium (Zr), cobalt (Co), molybdenum (Mo), tungsten (W), zinc (Zn), lithium (Li), argentum (Ag), gallium (Ga), germanium (Ge), scandium (Sc), strontium (Sr), indium (In), vanadium (V), praseodymium (Pr), samarium (Sm), tantalum (Ta), gold (Au), beryllium (Be), chromium (Cr), arsenic (As), selenium (Se), yttrium (Y), niobium (Nb), ruthenium (Ru), rhodium (Rh), palladium (Pd), cadmium (Cd), tin (Sn), antimony (Sb), tellurium (Te), cerium (Ce), neodymium (Nd), promethium (Pm), gadolinium (Gd), terbium (Tb), dysprosium (Dy), holmium (Ho), erbium (Er), lutetium (Lu), hafnium (Hf), rhenium (Re), iridium (Ir), platinum (Pt), mercury (Hg), bismuth (Bi), and thorium (Th), as necessary.

The other elements described above may be added to the above-described aluminum metal as pure metals, compounds, alloys, and the like of the elements. Note that basically, a metal with a high melting point can be added in a master alloy with another additive element, and a metal with a low melting point can be added as a pure metal. The addition of the other elements may be performed before irradiating with the microwave, during irradiating with the microwave, and/or after irradiating with the microwave. Alternatively, the other elements may be comprised as an alloy composition in advance in the aluminum scrap and/or an aluminum alloy in the aluminum metal.

Note that "before irradiating with the microwave, during irradiating with microwave, and/or after irradiating with the microwave" refers to one or more time points of before irradiating with the microwave, during irradiating with the microwave, and after irradiating with the microwave.

The content of each of the above-described other elements is not limited. The content of each of the other elements, as a metal, is usually 0.0001 mass% to 20 mass% and, in one embodiment, 0.001 mass% to 12 mass%, based on the total mass of the aluminum metal. The content of all the other elements, as metals, is usually 0.01 mass% to 30 mass%, 0.01 mass% to 16 mass% in one embodiment, and 0.01 mass% to 5 mass% in another embodiment, based on the total mass of the aluminum metal. The content of the other elements can be measured by a known method in the technical field. The method may vary depending on the alloy element, but for example, the content of the other elements can be measured by the ICP emission spectrochemical analysis method.

The remnants of the aluminum metal of the present invention, other than aluminum and the other elements, are inevitable impurities, organic matter, such as coolant (cutting oil), lubricating oil and the like, during aluminum product processing, moisture, and the like that can be comprised in aluminum scrap.

Here, examples of the inevitable impurities include phosphorus (P) and sulfur (S). The content of phosphorus (P) and sulfur (S) is not limited. The content of each of phosphorus (P) and sulfur (S) is usually 0.01 mass% or less based on the total mass of the aluminum metal. The content of phosphorus (P) and sulfur (S) can be measured by a known method in the technical field. The method may vary depending on the element to be measured, but for example, the content can be measured by the ICP emission spectrochemical analysis method.

In addition, organic matter and moisture that can be comprised in the aluminum scrap may be removed in advance. For the removal of organic matter and moisture, a known method in the technical field can be used, and examples include drying at a temperature of usually 100°C to 600°C.

The size of the above-described aluminum metal is not limited. In the irradiating the aluminum metal described above with the microwave, the aluminum metal and/or a microwave irradiation source can be moved so that the aluminum metal is uniformly irradiated with the microwave.

The above-described microwave (microwaves) with which the aluminum metal is irradiated is not limited.

The microwave originates from a microwave irradiation source (microwave oscillator (magnetron)). The microwave irradiation source can be used in both a single-mode system and a multi-mode system.

The number of microwave irradiation sources is not limited. The number of microwave irradiation sources may be one or may be two or more.

The output of the microwave irradiation source is not limited. The output of the microwave irradiation source is usually 1 W to 10 kW and, in one embodiment, 500 W for household use to 10 kW for industrial use.

The frequency of the microwave originating from the microwave irradiation source can be appropriately changed and is not limited. The frequency of the microwave is usually 0.9 GHz to 10 GHz and, in one embodiment, 2 GHz to 6 GHz. In one embodiment, a frequency of an industrial microwave power supply of 2.45 GHz is used as the frequency of the microwave.

The time for which the above-described aluminum metal is irradiated with the microwave is not limited. The microwave irradiation time can be changed appropriately according to the reaction conditions (composition and quantity of the aluminum metal, microwave conditions, pressure, atmosphere, temperature, and the like during irradiating with the microwave). The microwave irradiation time is usually 0.1 seconds to 600 seconds and, in one embodiment, 60 seconds to 300 seconds.

In one embodiment, the microwave is uniform during irradiation. In one embodiment, the microwave irradiation conditions described above are constant during irradiating with the microwave.

With the present invention, a recycled aluminum metal lump can be manufactured in a short period of time by high-density energy of a microwave because a recycled aluminum metal lump can be manufactured by irradiating aluminum metal comprising aluminum scrap with a microwave.

The aluminum metal can also be compressed.

Accordingly, the method for manufacturing a recycled aluminum metal lump of the present invention may further comprise a step of compressing the above-described aluminum metal (a compression step of aluminum metal).

The compression step of aluminum metal described above is not limited. The compression step of aluminum metal described above can be performed using a known technique in the technical field. Examples of the compression step of aluminum metal include, for example, uniaxial molding, cold isostatic pressing (CIP) molding, hot isostatic pressing (HIP) molding, and roller pressing.

The compression step of aluminum metal described above may be performed using, for example, a molding box. Examples of the molding box include those made of metal, such as aluminum or iron.

By using a molding box in the compression step of aluminum metal described above, it is possible to avoid the scattering of aluminum scrap, especially, aluminum scrap in fine pieces, such as powder or chips, especially the scattering during irradiating with the microwave, that is, during heating. In addition, by using a product-shaped molding box as a molding box, the fabricated recycled aluminum metal lump can be turned directly into a product. Note that mixing of a mold that can be used as a molding box and a processing cutting tool can be avoided by, for example, introducing a magnetic separation step.

Furthermore, the timing for the compression step of aluminum metal described above is not limited. Accordingly, the compression step of aluminum metal can be performed before irradiating with the microwave, during irradiating with the microwave, and/or after irradiating with the microwave. For example, by performing the compression step of aluminum metal described above before irradiating with the microwave and preparing aluminum metal with an appropriate size, the introduction of the aluminum metal into a molding box that can be used for the microwave irradiation is facilitated. By performing the compression step of aluminum metal described above during irradiating with the microwave and/or after irradiating with the microwave, the density of the resulting recycled aluminum metal lump can be more increased.

The pressure in the compression step of aluminum metal described above is not limited. The pressure in the compression step of aluminum metal described above is usually 10 MPa to 500 MPa.

The period in the compression step of aluminum metal described above is not limited. The period in the compression step of aluminum metal described above is until the aluminum metal is formed or molded by the compression step of aluminum metal. The period in the compression step of aluminum metal described above is usually 0.1 seconds to 60 seconds and, in one embodiment, 2 seconds to 5 seconds.

The temperature in the compression step of aluminum metal described above is not limited.

When the method for manufacturing a recycled aluminum metal lump of the present invention comprises the compression step of aluminum metal, organic matter and moisture that can be comprised in aluminum scrap can be removed through seeping (extraction) and separation. Furthermore, the formation of air pockets derived from gasification into the recycled aluminum metal lump obtained in the end can be avoided, and the density of the aluminum metal lump can be increased. In case that the density of the recycled aluminum metal lump manufactured by the manufacturing method of the present invention increases, the melting yield can be improved when the aluminum metal lump is melted and used.

The atmosphere in the method for manufacturing a recycled aluminum metal lump of the present invention is not limited. The method for manufacturing a recycled aluminum metal lump of the present invention may be performed under an atmosphere of atmospheric air; inert gas, such as argon (Ar) and/or helium (He); or neutral gas, such as nitrogen (N₂), dry hydrogen (dryH₂), and/or ammonia (NH₃).

The method for manufacturing a recycled aluminum metal lump of the present invention, especially the microwave irradiation step to aluminum metal, may be performed under a reducing atmosphere, for example, under an atmosphere comprising hydrogen (H₂), carbon monoxide (CO), and/or hydrocarbon gas (such as CH₄, C₃H₈, and C₄H₁₀). Alternatively, the method for manufacturing a recycled aluminum metal lump of the present invention, especially the microwave irradiation step to aluminum metal, may be performed by placing a reductant, such as carbon, near the aluminum metal, for example, by mixing the aluminum metal and the reductant.

By implementing the present invention under a reducing atmosphere or in the presence of a reductant, it is possible to avoid further oxidation of aluminum metal, especially aluminum scrap, or to reduce the oxidized aluminum metal to metallic aluminum, allowing the proportion of oxide in the resulting recycled aluminum metal lump to be reduced. Accordingly, with the recycled aluminum metal lump thus obtained, when the aluminum metal lump is melted and used, the amount of dross or slag generated during melting can be reduced, and the melting yield can be improved.

Since the method for manufacturing a recycled aluminum metal lump of the present invention does not necessarily require the preparation of aluminum molten metal, which is usually performed when a recycled aluminum metal lump is manufactured, the amount of CO₂ generated can be reduced from the viewpoint of life cycle assessment (LCA).

The density of the recycled aluminum metal lump manufactured by the present invention can be adjusted, as necessary. For example, the recycled aluminum metal lump manufactured by the present invention can increase in density, and its density is usually 2.00 g/cm³ to the true density of aluminum metal (for example, 2.70 g/cm³ for metallic aluminum). Alternatively, the density of the recycled aluminum metal lump manufactured by the present invention can be usually 99% or more, assuming that the density is 100% when the recycled aluminum metal lump completely becomes a metal or alloy.

Accordingly, when the recycled aluminum metal lump manufactured by the present invention is melted and used, the melting yield can be improved. Furthermore, the recycled aluminum metal lump manufactured by the present invention can be directly used as a product, such as a component, or the recycled aluminum metal lump manufactured by the present invention can be formed into a product, such as a component, by performing processing, such as cutting. **In** addition, the high-density recycled aluminum metal lump manufactured by the present invention can be used similarly to a usual aluminum ingot.

When the recycled aluminum metal lump manufactured by the present invention comprises Si as the other element, the internal structure is composed of a granular Si phase and an aluminum eutectic. This is because the recycled aluminum metal lump manufactured by the present invention is formed in a short period of time, and dendrites are not formed (present) in the internal structure. Furthermore, a boundary is present in the internal structure of the recycled aluminum metal lump manufactured by the present invention. Note that voids are also present in the internal structure of the recycled aluminum metal lump manufactured by the present invention. However, the recycled aluminum metal lump manufactured by the present invention can increase in density, and its density can be within the range described above. Accordingly, the volume of the voids can be decreased.

### Examples

While the following describes some Examples regarding the present invention, it is not intended to limit the present invention to those described in such Examples.

### I. Sample Preparation

### Example 1

Under an argon atmosphere, using a molding box made of silicon nitride, aluminum chips as aluminum scrap (Cu: 1.5 mass% to 3.5 mass%, Si: 9.6 mass% to 12 mass%, Mg: 0.3 mass% or less, Zn: 1.0 mass% or less, Fe: 1.3 mass% or less, Mn: 0.5 mass% or less, Ni: 0.5 mass% or less, Sn: 0.2 mass% or less, Pb: 0.2 mass% or less, Ti: 0.3 mass% or less, Al: remnant) were irradiated with the microwave at 1 kW while a pressure of 5 MPa was applied, to manufacture a recycled aluminum metal lump of Example 1.

### Comparative Example 1

Under an argon atmosphere, aluminum chips as aluminum scrap (Cu: 1.5 mass% to 3.5 mass%, Si: 9.6 mass% to 12 mass%, Mg: 0.3 mass% or less, Zn: 1.0 mass% or less, Fe: 1.3 mass% or less, Mn: 0.5 mass% or less, Ni: 0.5 mass% or less, Sn: 0.2 mass% or less, Pb: 0.2 mass% or less, Ti: 0.3 mass% or less, Al: remnant) were compressed at a pressure of 5 MPa, to manufacture a briquette of Comparative Example 1.

### Comparative Example 2

As Comparative Example 2, an aluminum ingot (ADC12, cut piece, Cu: 1.5 mass% to 3.5 mass%, Si: 9.6 mass% to 12 mass%, Mg: 0.3 mass% or less, Zn: 1.0 mass% or less, Fe: 1.3 mass% or less, Mn: 0.5 mass% or less, Ni: 0.5 mass% or less, Sn: 0.2 mass% or less, Pb: 0.2 mass% or less, Ti: 0.3 mass% or less, Al: remnant) was prepared.

### II. Evaluation

### (External Appearance and Interior Observation)

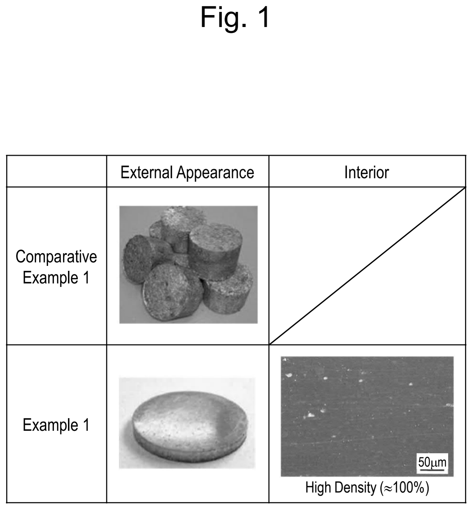

External appearance and interior observation using an optical microscope were conducted on the briquette of Comparative Example 1 and the recycled aluminum metal lump of Example 1. Fig. 1 shows the results.

From Fig. 1, the external appearance of the briquette of Comparative Example 1 had voids inside, and was low in density. On the other hand, the external appearance of the recycled aluminum metal lump of Example 1 had a metallic luster like metallic aluminum, and it was confirmed that it was high in density from the interior observation.

### (Sectional Structure Observation)

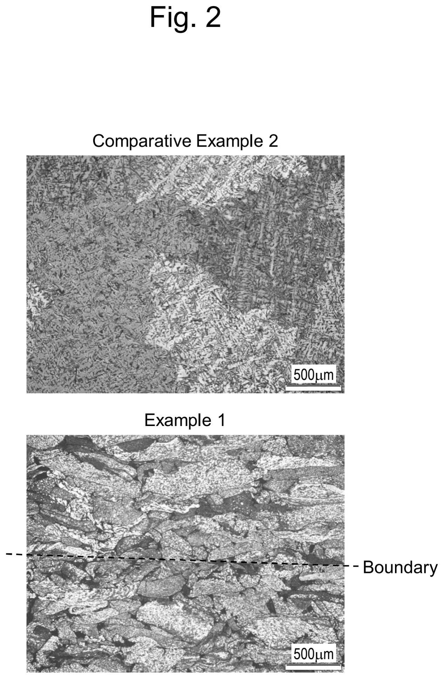

Sectional structure observation was conducted on the aluminum ingot of Comparative Example 2 and the recycled aluminum metal lump of Example 1 using an optical microscope. Fig. 2 shows the results.

From Fig. 2, the following was found.

In the aluminum ingot of Comparative Example 2, the internal structure was composed of a needle-like Si phase and an aluminum eutectic, and dendrites were generated in the internal structure.

On the other hand, in the recycled aluminum metal lump of Example 1, the internal structure was composed of a granular Si phase and an aluminum eutectic, and no dendrite was produced in the internal structure. Furthermore, in the recycled aluminum metal lump of Example 1, a clear boundary was present in the internal structure and voids were also present, compared with the aluminum ingot of Comparative Example 2. However, the recycled aluminum metal lump of Example 1 was high in density, and its density was 99% or more, assuming that the density was 100% when the recycled aluminum metal lump completely became a metal (alloy). Accordingly, the volume of the voids was small.

That is, in the aluminum ingot of Comparative Example 2, when the melted metal is put into a mold and formed, the melted metal slowly solidifies, thereby generating dendrites. On the other hand, since the recycled aluminum metal lump of Example 1 is formed in a short period of time by irradiating with the microwave, no dendrite is produced.

Furthermore, with Example 1, melting is not required in the manufacturing process, a metal lump can be manufactured on the spot on site, and further, the oxidation of attached coolant can be avoided. Accordingly, Example 1 enables CO₂ reduction from an LCA perspective.

When aluminum alloys were used as the aluminum scrap, among the aluminum alloys, an aluminum alloy with an alloy composition used as wrought material, such as A6061 having few impurities, tended to have a thinner boundary than an aluminum alloy with an alloy composition having many impurities.

### (In-Furnace Melting Test)

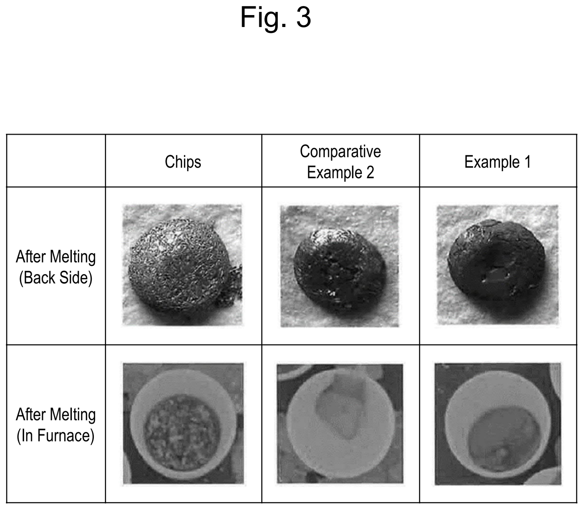

About 28 g each of chips, the aluminum ingot of Comparative Example 2, and the recycled aluminum metal lump of Example 1 were each put into a furnace at a temperature of 800°C and melted for about 30 minutes, and gas and oxidation statuses in the furnace were confirmed. Fig. 3 shows the results.

From Fig. 3, it was found that the chips had a lot of oxides even during melting and had a very low melting yield, whereas the recycled aluminum metal lump of Example 1 had slightly more oxides than the aluminum ingot of Comparative Example 2 but had no gas generated.

### (Melting Test in Aluminum Molten Metal)

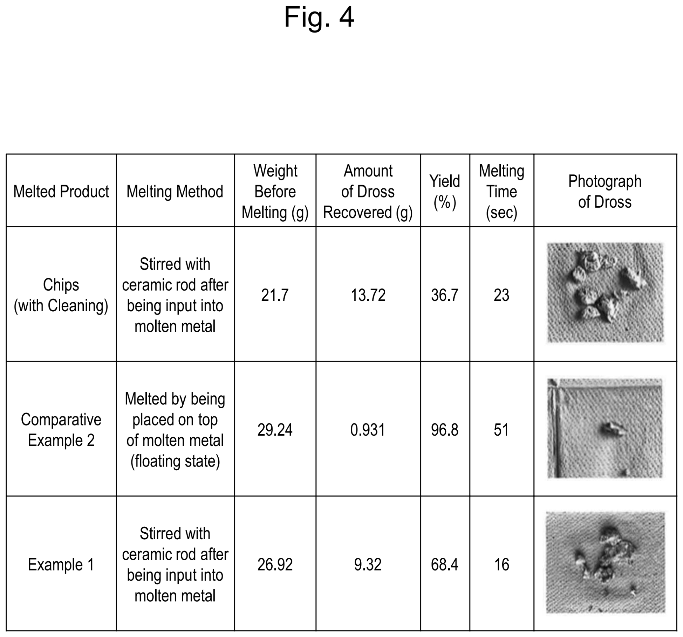

About 28 g each of chips, the aluminum ingot of Comparative Example 2, and the recycled aluminum metal lump of Example 1 were each melted in aluminum molten metal. Fig. 4 shows the results.

From Fig. 4, it was found that the chips floated on the molten metal and had a melting yield of less than 40%, whereas the melting yield of the recycled aluminum metal lump of Example 1 was improved to 60% or more.

All the publications, patents, and patent applications cited in the description are directly incorporated herein as references.

## Claims

1. A method for manufacturing a recycled aluminum metal lump, the method comprising irradiating aluminum metal including aluminum scrap with a microwave.

2. The method according to claim 1,
wherein the aluminum scrap is aluminum scrap in one or more forms selected from the group consisting of powder, chip, burr, and briquette.

3. The method according to claim 1 or 2, further comprising compressing the aluminum metal.

4. The method according to claim 3,
wherein the compressing the aluminum metal is performed before the irradiating with the microwave, during the irradiating with the microwave, and/or after the irradiating with the microwave.

5. The method according to claim 3,
wherein the compressing the aluminum metal is performed using a molding box.

6. The method according to claim 4,
wherein the compressing the aluminum metal is performed using a molding box.
